# EUROPEAN PATENT APPLICATION

(11) **EP 4 813 934 A1**
(43) Date of publication of application: **30.09.2026**
(21) Application number: 24869895.3
(22) Date of filing: 25.06.2024
(51) Int. Cl.: C02F 9/00, C02F 11/121, B01F 25/42, C02F 1/00, C02F 1/32, C02F 1/56, C02F 1/52, C02F 1/66

(54) **STANDARDIZED, LOW-CARBON AND MODULARIZED WATER PURIFICATION SYSTEM**

(30) Priority: 28.09.2023 CN 202311290871; 28.09.2023 CN 202322686431 U
(71) Applicant: Leung, Wai On, Guangdong 518048 (CN)
(72) Inventor: Leung, Wai On, Guangdong 518048 (CN)
(74) Representative: Chung, Hoi Kan
(86) International application number: PCT/CN2024/101233
(87) International publication number: WO 2025/066335

(57) **Abstract**

The present invention discloses a standardized, low carbon, modular water purification system for surface water treatment. The system comprises a bottom-layer multipurpose tank, a middle-layer impinging stream reactor, and a top-layer enclosed clean water storage tank, which together form an integrated, three-layer stacked design that minimizes the overall footprint. The system further incorporates a backwash function that directs filtrate and backwash wastewater from a multilayer media filtration chamber over a triangular weir plate into an influent balance chamber for reprocessing, thereby preventing water wastage and maximizing surface water utilization. Additionally, a sludge dewatering function facilitates in situ dewatering of process sludge to reduce carbon emissions associated with sludge transport and disposal.

## Description

### TECHNICAL FIELD

The present invention relates to the technical field of surface water treatment, and in particular to a standardized, low-carbon, and modular water purification system.

### BACKGROUND OF THE INVENTION

Surface water refers to water bodies found on land, which are primarily formed by natural precipitation, glacier meltwater, and spring-fed surface runoff. Due to the increasing frequency of global extreme climatic events, the occurrences of wildfires and acid rain have also risen, leading to the discharge of excessive alkaline or acidic wastewater into surface runoff, thereby causing surface water to become overly acidified or alkalized. Additionally, the large-scale application of chemical fertilizers further contributes to the acidification or alkalization of surface water.

In conventional water purification methods, the process of treating overly acidified or alkalized surface water generally involves steps such as flocculation, sedimentation, filtration, and disinfection. In certain environments (such as remote villages with power shortages, arid regions with water scarcity, or underdeveloped areas with insufficient infrastructure), conventional water purification processes require flocculation tanks, sedimentation tanks, and filtration tanks that occupy large areas. This results in high construction costs and long treatment times. Furthermore, the flocculation process requires high-power stirring equipment to adequately mix chemical agents with the untreated surface water. Consequently, existing water purification methods suffer from low purification efficiency, limited applicability, and poor economic viability.

### SUMMARY OF THE INVENTION

The present invention provides a standardized, low-carbon, and modular water purification system for solving problems existing in conventional water purification methods.

To achieve the above objective, the present invention adopts the following technical solution. A standardized, low-carbon, and modular water purification system is provided, wherein a hardware portion of the water purification system is arranged in a three-layer stacked configuration, the system comprising:
a multipurpose tank (22) provided at a bottom layer;
an impinging stream reactor (21) provided at a middle layer; and
an enclosed clean water storage tank (20) provided at a top layer.

The multipurpose tank (22) is internally provided with a triangular weir plate (14) that divides the interior into an influent balance chamber (15) and a multilayer media filtration chamber (13). A raw water inlet (27) configured for connection with a water source is provided at an upper portion of a side wall of the multipurpose tank corresponding to the influent balance chamber (15). The multilayer media filtration chamber (13) is provided with a water distribution module (8), a multilayer media filtration module (11), and wedge wire lateral screen pipework (12). A filtrate outlet (38) is provided on a side wall of the multipurpose tank corresponding to the multilayer media filtration chamber (13). The water distribution module (8) is disposed directly above the multilayer media filtration module (11). The wedge wire lateral screen pipework (12) is disposed at a bottom of the multilayer media filtration chamber (13) and is in fluid communication with the filtrate outlet (38).

The impinging stream reactor (21) is disposed above the multilayer media filtration chamber (13) and is provided with a hopper-type casing water treatment tank (4), an equipment control module (19), and a UV disinfection system (25). An internal space of the reaction section housing is through-going, wherein an upper portion of the housing is formed as a hollow cylindrical structure and a lower portion is formed as a hollow inverted conical structure. A hopper-type casing water treatment tank inlet (43) is provided at an upper portion of the housing for receiving raw water from the influent balance chamber (15). The hopper-type casing water treatment tank inlet (43) is connected to an automatic chemical dosing subsystem through a preset pipeline. A plurality of conical filters (3) are stacked at a central position within the reaction section. A transfer module is provided at an upper portion of the reaction section for receiving clarified water after solid-liquid separation by the conical filters (3). The transfer module is provided with a first water outlet (39), which is in fluid communication with the water distribution module (8). The equipment control module (19) is located at one side of the reaction section and is configured to control operation of the water purification system.

The enclosed clean water storage tank (20) is disposed above the impinging stream reactor (21) and is provided with a clean water outlet (23), a clean water inlet (40), and a backwashing subsystem configured to backwash the multilayer media filtration module (11). The clean water inlet (40) is connected to the filtrate outlet (38) through a preset valve assembly and is further connected to the UV disinfection system (25).

Preferably, the automatic chemical dosing subsystem comprises chemical tanks (18) and a dosing device configured to pump chemical agents from the chemical tanks. The influent balance chamber (15) is provided with a first influent pipe (6) in fluid communication with a first transfer pump (33), an outlet of the first transfer pump (33) being connected to a second influent pipe (42) leading to the hopper-type casing water treatment tank inlet (43). A first chemical injection point (34) is provided at an elbow of the first influent pipe (6). A second chemical injection point (10) is provided at an elbow of the second influent pipe (42). A third chemical injection point is provided at an outlet of the second influent pipe (42). The first, second, and third chemical injection points are in fluid communication with a chemical outlet of the dosing device.

Preferably, a main pipe member of the water distribution module (8) has a rectangular shape with rounded corners, and the main pipe member is provided with a plurality of micro-holes facing directly toward the filtration area. The main pipe member is in fluid communication with the first water outlet (39).

Preferably, the transfer module includes a water-pass tray (35) and a transit tray (37), the water-pass tray being in fluid communication with the transit tray. An impinging nozzle (2) is provided within the reaction section and is disposed adjacent to the hopper-type casing water treatment tank inlet (43). The conical filters (3) are in a hollow frustum shape. The water-pass tray (35) has a rectangular tray shape, and a circular hole is provided at a central position thereof. A hollow cylinder is provided at a bottom of the circular hole, and top ends of the stacked conical filters (3) are in fluid communication with the hollow cylinder.

Preferably, the system further comprises a sludge dewatering bag (17). A desludge outlet (26) is provided at a bottom of the housing of the reaction section. Gratings (16) are provided above the influent balance chamber (15), and the sludge dewatering bag (17) is placed on the gratings (16). The desludge outlet (26) is connected to a desludge valve (30), and the desludge valve (30), when opened, connects a pipe between the sludge dewatering bag (17) and the desludge outlet (26).

Preferably, a plurality of chemical tanks (18) are provided, and each chemical tank is configured with an independent dosing device.

Preferably, the system further comprises an equipment control area (41) provided adjacent to one side of the reaction section. The chemical tanks (18) are located in a middle portion of the equipment control area, the equipment control module (19) is located above the chemical tanks, a second transfer pump (32) and the UV disinfection system (25) are located at a lower side of the equipment control area, and the first transfer pump (33) is located at another lower side of the equipment control area and is spaced apart from the second transfer pump (32).

Preferably, static mixing blades are provided within a vertical portion of the second influent pipe (42).

Preferably, a pH detection probe and a water level sensor are provided at a central position of the water-pass tray (35).

Preferably, the enclosed clean water storage tank (20) is provided with a backwash liquid discharge pipe (5). The backwashing subsystem comprises an electric three-way valve (9) and a backwash liquid discharge pipe (5). A first port of the electric three-way valve is connected to the filtrate outlet (38), a second port is connected to the backwash liquid discharge pipe (5), and a third port is connected to a second effluent outlet pipe (24). The second effluent outlet pipe (24) is connected to the second transfer pump (32) and then to an inlet of the UV disinfection system (25), and an outlet of the UV disinfection system (25) is in fluid communication with the clean water inlet (40).

Preferably, the clean water inlet (40) is provided at an upper portion of a front side of the enclosed clean water storage tank (20), the clean water outlet (23) is provided at a bottom end of a middle portion of a side surface of the enclosed clean water storage tank (20), and the backwash liquid discharge port (5) is provided opposite to the clean water outlet (23).

Preferably, water level sensors are provided in both the influent balance chamber (15) and the enclosed clean water storage tank (20).

### BENEFICIAL EFFECTS OF THE PRESENT INVENTION

In summary, the present invention provides at least one of the following beneficial technical effects.
1. Compared with the prior art, the present invention adopts a standardized, stacked, and modular integrated design, which can significantly reduce the footprint of the water purification system. The system further includes a backwashing function and a sludge dewatering function. Through the backwashing function, permeate and backwash wastewater generated in the multilayer media filtration chamber can flow over the triangular weir plate and be recovered to the influent balance chamber for further treatment, thereby avoiding waste of water resources and maximizing the utilization rate of surface water. Through the sludge dewatering function, sludge generated during operation of the system can be dewatered on site, thereby reducing carbon emissions associated with sludge transportation.
2. Compared with the prior art, the system adopts a modular design, which facilitates transportation and enables the system to be conveniently relocated to locations where water purification is required.
3. Compared with the prior art, the system can be automatically controlled by the equipment control module, thereby enabling automated water purification treatment. The system is easy to operate and reduces the need for excessive manual management.
4. Compared with the prior art, when water flows through the second influent pipe, the static mixing blades promote thorough mixing of the added chemical agents with the surface water without the need for an external mechanical agitator.

### BRIEF DESCRIPTION OF THE DRAWINGS

The accompanying drawings illustrate various embodiments of the system and serve to explain the principles of the invention. In these drawings:
FIG. 1 is a front view of the standardized, low-carbon, and modular water purification system according to an embodiment of the present invention.
FIG. 2 is a top view of the standardized, low-carbon, and modular water purification system according to an embodiment of the present invention.
FIG. 3 is a left-side view of the standardized, low-carbon, and modular water purification system according to an embodiment of the present invention.
FIG. 4 is a right-side view of the standardized, low-carbon, and modular water purification system according to an embodiment of the present invention.
FIG. 5 is a schematic diagram illustrating an internal structure of the standardized, low-carbon, and modular water purification system according to an embodiment of the present invention.
FIG. 6 is a perspective view of the standardized, low-carbon, and modular water purification system according to an embodiment of the present invention.
FIG. 7 is another perspective view of the standardized, low-carbon, and modular water purification system according to an embodiment of the present invention.
FIG. 8 is a top structural schematic view of the impinging stream reactor and the sludge dewatering bag according to an embodiment of the present invention.
FIG. 9 is a top structural schematic view of the bottom layer of the standardized, low-carbon, and modular water purification system according to an embodiment of the present invention.
FIG. 10 is a structural schematic diagram of a main pipe of the water distribution module according to an embodiment of the present invention.

In the figures: **1** - Backwashing water outlet; **2** - Impinging nozzle; **3** - Conical filters; **4** - Hopper-type casing water treatment tank; **5** - Backwashing water outlet pipe; **6** - First influent pipe; **7** - First effluent outlet pipe; **8** - Water distribution module; **9** - Three-way valve; **10** - Second chemical injection point; **11** - Multilayer media filtration module; **12** - Wedge wire lateral screen pipework; **13** - Multilayer media filtration chamber; **14** - Triangular weir plate; **15** - Influent balance chamber; **16** - Gratings; **17** - Sludge dewatering bag; **18** - Chemical tanks; **19** - Equipment control module; **20** - Enclosed clean water storage tank; **21** - Impinging stream reactor; **22** - Multipurpose tank; **23** - Clean water outlet; **24** - Second effluent outlet pipe; **25** - UV disinfection system; **26** - Desludge outlet; **27** - Raw water inlet; **28** - Raw water outlet; **29** - Desludge pipe; **30** - Desludge valve; **31** - Air release valve; **32** - Second transfer pump; **33** - First transfer pump; **34** - First chemical injection point; **35** - Water-pass tray; **36** - Chemical dosing area; **37** - Interim chamber; **38** - Filtrate outlet; **39** - First effluent outlet; **40** - Clean water inlet; **41** - Equipment control area; **42** - Second influent pipe; **43** - Hopper-type casing water treatment tank inlet.

### DETAILED DESCRIPTION OF EMBODIMENTS

The technical solutions of the present invention will be described clearly and completely below with reference to the accompanying drawings. It should be understood that the embodiments described herein are only some embodiments of the present invention rather than all embodiments. Based on the embodiments of the present invention, all other embodiments that can be obtained by those skilled in the art without making inventive efforts shall fall within the scope of protection of the present invention.

In the description of the present invention, it should be noted that the terms "center," "upper," "lower," "left," "right," "vertical," "horizontal," "inner," and "outer" indicate orientations or positional relationships based on those shown in the accompanying drawings. These terms are used only for convenience of description and simplification of explanation, and do not indicate or imply that the referenced device or element must have a particular orientation or be constructed and operated in a particular orientation. Therefore, such terms should not be construed as limiting the present invention.

In the description of the present invention, unless otherwise expressly specified or limited, the terms "mounted," "connected," and "coupled" should be interpreted broadly. For example, the connection may be a fixed connection, a detachable connection, or an integral connection; it may be a mechanical connection or an electrical connection; it may be a direct connection or an indirect connection through an intermediate medium; or it may represent internal communication between two elements. Those skilled in the art can understand the specific meanings of the above terms according to the particular circumstances.

An embodiment of the present invention provides a standardized, low-carbon, and modular water purification system for solving problems existing in the prior art.

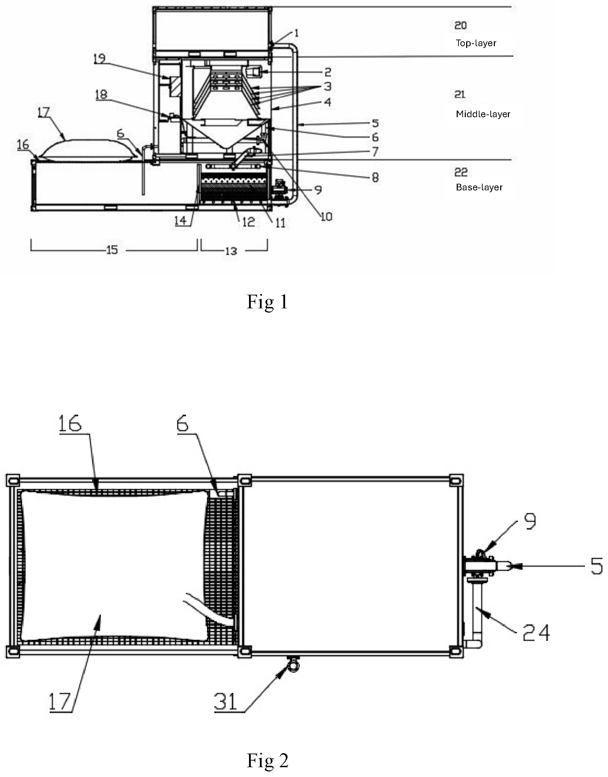

Referring to FIG. 1, the standardized, low-carbon, and modular water purification system has a hardware structure arranged in a three-layer stacked configuration.

The first layer of the water purification system is a top layer, which is provided with an enclosed clean water storage tank (20). The enclosed clean water storage tank (20) is used for storing purified water produced by the water purification system.

The second layer of the water purification system is a middle layer, which is provided with an impinging stream reactor (21). The impinging stream reactor (21) is configured to allow surface water and chemical agents to react sufficiently so as to obtain preliminarily treated water. The third layer of the water purification system is a bottom layer, which is provided with a multipurpose tank (22). The multipurpose tank (22) is internally provided with a triangular weir plate (14) so as to divide the interior into an influent balance chamber (15) and a multilayer media filtration chamber (13). The influent balance chamber (15) is configured to receive surface water from an external source, while the multilayer media filtration chamber (13) is configured to receive the preliminarily treated water and perform filtration. The filtered water is then delivered through a preset valve assembly for disinfection before being transported to the top layer.

Compared with the prior art, the present invention adopts a standardized, stacked, and modular integrated design, which can minimize the footprint of the water purification system and thereby overcome the problems existing in the prior art.

Referring to FIGS. 1-4, a raw water inlet (27) is provided at an upper portion of a left side wall of the multipurpose tank (22) corresponding to the influent balance chamber (15). A raw water outlet (28) is provided at a lower portion of the same side wall. Accordingly, the influent balance chamber (15) of the multipurpose tank (22) can receive raw water through the raw water inlet (27), and discharge excess water through the raw water outlet (28) when necessary. The multilayer media filtration chamber (13) of the multipurpose tank (22) is provided with a water distribution module (8), a multilayer media filtration module (11), and wedge wire lateral screen pipework (12). A filtrate outlet (38) is provided on a right side wall of the multipurpose tank (22) corresponding to the multilayer media filtration chamber (13) for discharging filtered water. The water distribution module (8) is disposed directly above the multilayer media filtration chamber (13). The multilayer media filtration module (11) is disposed inside the multipurpose tank (22). The wedge wire lateral screen pipework (12) is disposed at a bottom of the multilayer media filtration chamber (13) and is in fluid communication with the filtrate outlet (38).

A liquid level sensor is provided in the influent balance chamber (15) of the multipurpose tank (22) and in the enclosed clean water storage tank (20) to detect the liquid level in the respective regions. By means of a preset water level control system, overflow caused by excessive liquid levels can be avoided, thereby preventing unnecessary water loss.

Compared with the prior art, surface water from the water source is collected through the raw water inlet (27) into the rectangular influent balance chamber (15) located at the left side of the bottom layer of the system. The influent balance chamber (15) is configured to receive and temporarily store surface water while simultaneously equalizing the inflow. A raw water outlet (28) is provided below the raw water inlet (27) for emergency discharge or cleaning purposes.

Referring to FIGS. 1-6, the impinging stream reactor (21) is disposed above the multilayer media filtration chamber (13). The impinging stream reactor (21) comprises a hopper-type casing water treatment tank (4), an equipment control area (41), and a UV disinfection system (25). An internal space of the hopper-type casing water treatment tank (4) is through-going. An upper portion of the tank is formed as a hollow cylindrical structure, and a lower portion is formed as a hollow inverted conical structure. An upper portion of the hopper-type casing water treatment tank (4) is provided with a hopper-type casing water treatment tank inlet (43) for receiving raw water from the influent balance chamber (15). The hopper-type casing water treatment tank inlet (43) is connected to an automatic chemical dosing subsystem through a preset pipeline.

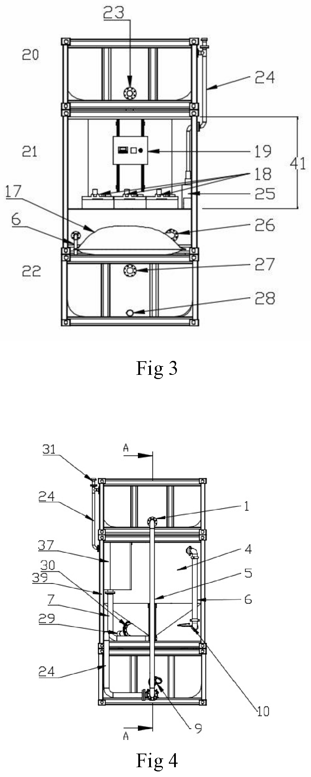

As shown in FIG. 3, the automatic chemical dosing subsystem comprises a plurality of chemical tanks (18). Each chemical tank (18) is provided with an independent dosing device configured to pump chemical agents from the chemical tanks. The chemical tanks (18) may be arranged according to operational requirements to automatically inject chemicals such as coagulants, flocculants, and pH adjustment agents into the influent pipeline. For example, organic flocculants or organic coagulants may be used to assist the purification process by causing pollutants or suspended solids in the water to aggregate into larger flocs, thereby enabling faster sedimentation. Such biodegradable chemicals can reduce the risk of secondary contamination of purified water. Examples include tannin-based flocculants and chitosan.

As shown in FIGS. 1, 5, and 6, the influent balance chamber (15) of the multipurpose tank (22) is provided with a first influent pipe (6), which is connected to a first transfer pump (33). An outlet of the first transfer pump (33) is connected to a second influent pipe (42), and the second influent pipe (42) is connected to the hopper-type casing water treatment tank inlet (43). A first chemical injection point (34) is provided at an elbow of the first influent pipe (6). A second chemical injection point (10) is provided at an elbow of the second influent pipe (42). A third chemical injection point is provided at an outlet of the second influent pipe (42). The first chemical injection point (34), the second chemical injection point (10), and the third chemical injection point are all in fluid communication with an outlet of the dosing device. Static mixing blades are provided within a vertical portion of the second influent pipe (42). When water flows through the second influent pipe, the static mixing blades ensure that the added chemical agents are thoroughly mixed with the surface water without the need for an external mechanical agitator.

As shown in FIG. 3, the equipment control area (41) is disposed adjacent to one side of the hopper-type casing water treatment tank (4). The chemical tanks (18) are located at a middle portion of the equipment control area (41). The first transfer pump (33) is located at a lower left portion of the equipment control area (41). The equipment control module (19) is disposed above the chemical tanks (18). A preset second transfer pump (32) and the UV disinfection system (25) are located at a lower right portion of the equipment control area (41). Both the UV disinfection system (25) and the equipment control module (19) are disposed within the equipment control area (41).

Preferably, the first transfer pump (33) is a high-efficiency, low-power-consumption brushless motor centrifugal pump.

Compared with the prior art, in the system of the present invention, raw water is pumped by the first transfer pump (33) from the first influent pipe (6) in the influent balance chamber (15), passes through the second influent pipe (42), and then enters the impinging stream reactor (21). A first chemical injection point (34) is provided at an elbow of the first influent pipe (6), and a second chemical injection point (10) is provided at an elbow of the second influent pipe (42). A third chemical injection point may optionally be provided at an inlet portion of the second influent pipe (42) according to operational requirements. When water flows through the elbows, the flow state inside the pipes changes from laminar flow to turbulent flow, thereby allowing the raw water and the chemical agents to be thoroughly mixed without the application of external mechanical forces.

With reference to FIGS. 1 and 2, the water purification system of the present invention further comprises a sludge dewatering bag (17). A desludge outlet (26) is formed at a bottom of the housing of the hopper-type casing water treatment tank (4). Gratings (16) are disposed above the influent balance chamber (15), and the sludge dewatering bag (17) is placed on the gratings (16). The desludge outlet (26) is connected to a desludge valve (30).

Compared with the prior art, the water purification system of the present invention can discharge sludge accumulated in the hopper-type casing water treatment tank (4) through the desludge pipe (29) into the sludge dewatering bag (17) by controlling the desludge valve (30), thereby performing sludge dewatering treatment. Residual filtrate permeates through the sludge dewatering bag (17) and flows back into the influent balance chamber (15) for secondary treatment, while the solid sludge retained in the sludge dewatering bag (17) can be disposed of or reused.

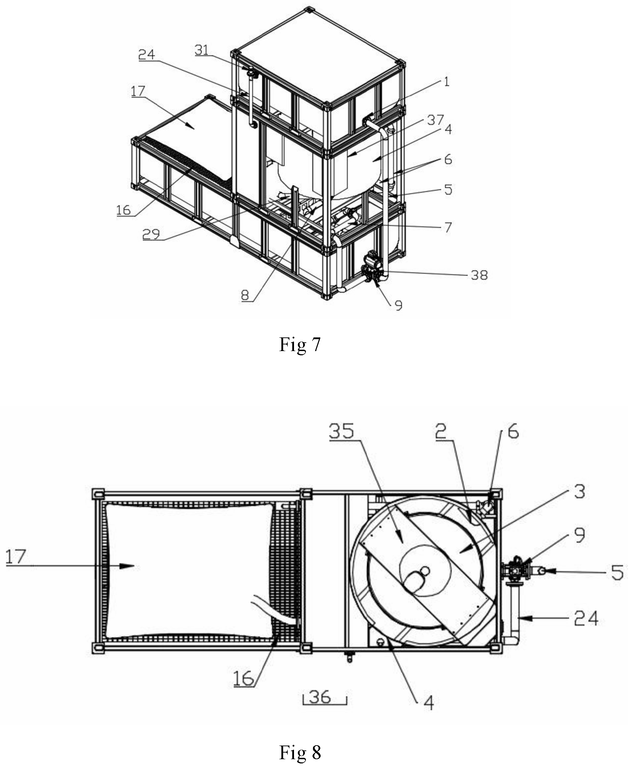

With reference to FIGS. 1-7, the enclosed clean water storage tank (20) is disposed above the impinging stream reactor (21). The enclosed clean water storage tank (20) is provided with a clean water outlet (23) for retrieving purified water, a clean water inlet (40), and a backwashing subsystem for backwashing the multilayer media filtration module (11).The clean water inlet (40) is connected to the filtrate outlet (38) through a preset valve assembly so that, when the corresponding flow passage is opened, filtered water from the multilayer media filtration chamber (13) is conveyed to the enclosed clean water storage tank (20) for storage. The clean water inlet (40) is further connected to the UV disinfection system (25) so that the filtered water is subjected to ultraviolet disinfection during the process of being conveyed into the enclosed clean water storage tank (20).

As shown in FIGS. 4, 5, and 7, the enclosed clean water storage tank (20) is provided with a backwashing water outlet (1). The backwashing subsystem comprises an electric three-way valve (9) and a backwashing water outlet pipe (5). A first port of the electric three-way valve (9) is connected to the filtrate outlet (38). A second port of the electric three-way valve (9) is connected to the backwashing water outlet pipe (5), and a third port of the electric three-way valve (9) is connected to a second effluent outlet pipe (24). The second effluent outlet pipe (24) is connected to a second transfer pump (32) and then to an inlet of the UV disinfection system (25). An outlet of the UV disinfection system (25) communicates with the clean water inlet (40) of the enclosed clean water storage tank (20).

Preferably, the second transfer pump (32) is a high-efficiency, low-power brushless motor centrifugal pump.

As shown in FIGS. 3-5, the clean water inlet (40) is disposed at an upper portion of a front side of the enclosed clean water storage tank (20). The clean water outlet (23) is disposed at a lower portion of a middle section of a side wall of the enclosed clean water storage tank (20), and the backwashing water outlet (1) is disposed opposite to the clean water outlet (23).

Compared with the prior art, the multilayer media filtration module (11) adopts a multilayer design. Different filtration media may be selected for different filtration layers according to requirements, such as filtration media of different particle sizes, including sand, gravel, coconut shell media, activated carbon, and the like. The wedge wire lateral screen pipework (12) is arranged at a bottom of the filtration module and collects filtered water through openings distributed around the pipe. When filtrate is discharged, the electric three-way valve (9) connects the flow passage between the filtrate outlet (38) and the second effluent outlet pipe (24). The filtrate is pumped from the wedge wire lateral screen pipework (12) through the second transfer pump (32) to the UV disinfection system (25) for disinfection treatment. The disinfected water is then conveyed into the enclosed clean water storage tank (20) for storage. When the water purification system performs backwashing, the electric three-way valve (9) connects the filtrate outlet (38) with the backwashing water outlet pipe (5). Clean water stored in the enclosed clean water storage tank (20) flows out from the backwashing water outlet (1) and enters the wedge wire lateral screen pipework (12) at the bottom of the multilayer media filtration chamber (13) through the backwashing water outlet pipe (5) by gravity. The backwashing water flows upward through the multilayer media filtration module (11), thereby removing contaminants accumulated within the filtration media. The contaminants are carried upward by the backwashing water to the top of the multilayer media filtration chamber (13), and the backwashing wastewater flows over the triangular weir plate (14) back into the influent balance chamber (15) for further treatment.

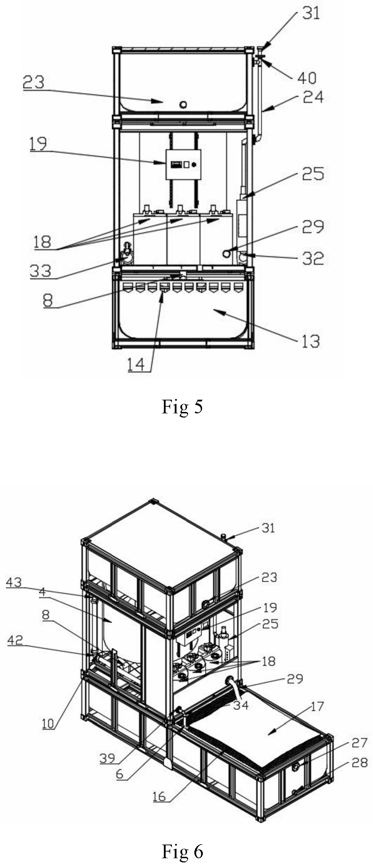

With reference to FIGS. 6-8, a water-pass tray (35) is disposed at a top portion of the hopper-type casing water treatment tank (4) for receiving clarified water separated by the conical filters (3). The water-pass tray (35) communicates with an interim chamber (37). An impinging nozzle (2) is disposed inside the hopper-type casing water treatment tank (4) and adjacent to the hopper-type casing water treatment tank inlet (43). The impinging nozzle enhances water flow movement inside the impinging stream reactor (21) so that stagnation of water flow can be avoided. The conical filters (3) are in a hollow frustum shape. When water enters the hopper-type casing water treatment tank (4), the flow path and residence time of the water are increased. Heavier suspended solids collide with surfaces of the conical filters (3) and settle along inclined surfaces toward the bottom of the hopper-type casing water treatment tank (4). The water-pass tray (35) has a rectangular tray shape with a circular opening at a central position thereof. A hollow cylinder is disposed at a bottom of the circular opening, and upper ends of the stacked conical filters (3) communicate with the hollow cylinder. After sedimentation and solid-liquid separation, water flows through gaps between the stacked conical filters (3) toward the center and overflows from the circular opening into the water-pass tray (35), and then flows into the interim chamber (37). A pH detection probe and a water level sensor are provided at the central portion of the water-pass tray (35) for detecting pH value and water level of the water therein.

Preferably, the water purification system can automatically inject acid-base regulating agents through the corresponding system so as to ensure that the pH value of purified water meets the required standard.

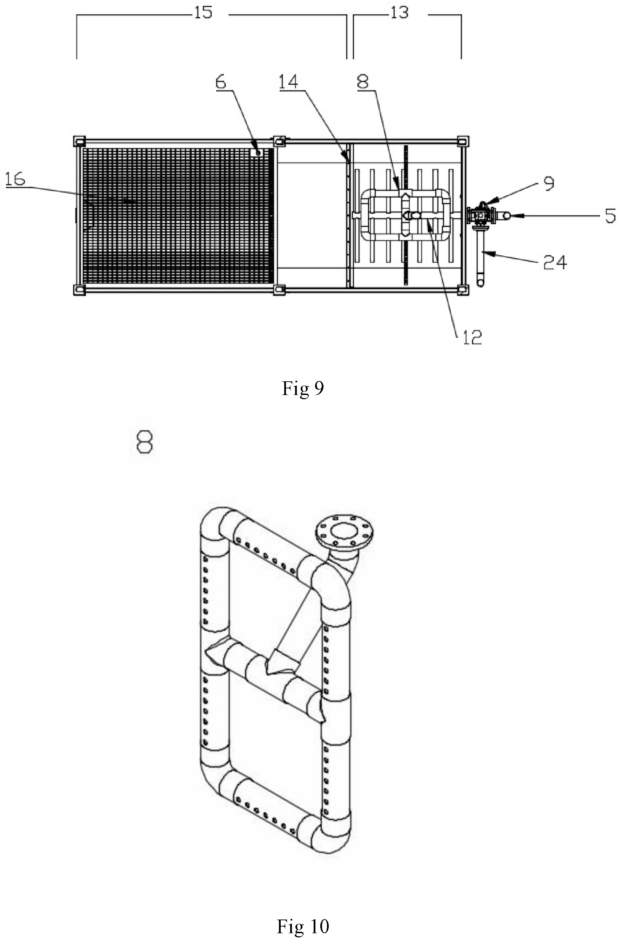

With reference to FIGS. 9 and 10, the main pipeline body of the water distribution module (8) is in the shape of a rounded rectangle. A plurality of micro-apertures are formed on the main pipeline body of the water distribution module (8), and the micro-apertures are oriented directly above the multilayer media filtration chamber (13). The main pipeline of the water distribution module (8) is connected to the first outlet (39) of the interim chamber (37).

### WORKING PROCESS AND PRINCIPLE OF THE INVENTION

First, a pipeline of an external raw water transfer pump is connected from the water source to the raw water inlet (27) of the influent balance chamber (15). Untreated surface water from the water source is pumped into the influent balance chamber (15) by the raw water transfer pump for a first-stage equalization treatment. When the liquid level meter in the influent balance chamber (15) detects that a predetermined amount of untreated water is present in the influent balance chamber (15), the first transfer pump (33) starts and begins operation, pumping the untreated raw water through the first influent pipe (6) and the second influent pipe (42) to the hopper-type casing water treatment tank inlet (43) of the hopper-type casing water treatment tank (4). At the same time, the automatic chemical dosing subsystem also starts operating, and the dosing devices of the chemical tanks (18) start to pump chemical agents to the first chemical injection point (34), the second chemical injection point (10) and the third chemical injection point, respectively.

Users may prepare appropriate chemicals in different chemical tanks (18) as required, such as coagulants, flocculants and pH regulators. If biodegradable organic chemicals such as organic flocculants or organic coagulants (for example Tanfloc or chitosan) are used, secondary contamination of the purified water can be avoided.

When water passes through pipe elbows, the flow state of the water inside the pipeline changes from laminar flow to turbulent flow. When chemicals are injected into the elbows of the influent pipes, the turbulent flow enables the raw water and chemicals to be thoroughly mixed without the assistance of external mechanical agitation. Since static mixing blades are arranged in the vertical section of the second influent pipe (42), when the water flow impacts the static mixing blades inside the pipe, the flow will also become turbulent, thereby promoting secondary mixing between the raw water and the chemicals.When water passes through pipe elbows, the flow state of the water inside the pipeline changes from laminar flow to turbulent flow. When chemicals are injected into the elbows of the influent pipes, the turbulent flow enables the raw water and chemicals to be thoroughly mixed without the assistance of external mechanical agitation. Furthermore, since static mixing blades are arranged in the vertical section of the second influent pipe (42), when the water flow impacts the static mixing blades inside the pipe, the flow will also become turbulent, thereby promoting secondary mixing between the raw water and the chemicals.

The raw water fully mixed with the chemicals enters the hopper-type casing water treatment tank (4) through the hopper-type casing water treatment tank inlet (43). The impinging nozzle (2) inside the hopper-type casing water treatment tank (4) drives the water to move along the circular inner wall of the reaction chamber, thereby generating a rotational flow within the tank. This increases the circulation of water within the treatment unit and ensures that the water flow inside the system does not stagnate.At the central position inside the hopper-type casing water treatment tank (4), a plurality of vertically stacked conical conical filters (3) are arranged. Each conical filter (3) adopts a hollow frustum design. When water enters the hopper-type casing water treatment tank (4), the conical filters (3) help extend the flow path and residence time of the water. As time progresses, impurity particles in the raw water are gradually adsorbed by the flocculant, and the volume and mass of the flocs increase accordingly. When the flocs collide with the conical filters (3) during the rotational flow process, their motion trajectories change. Heavier suspended solids settle along the inclined surfaces of the conical filters (3) and accumulate at the bottom of the hopper-type casing water treatment tank (4) to form sludge. After sedimentation and solid-liquid separation, the clarified water flows through the gaps between the stacked conical filters (3) toward the center and overflows from the circular opening at the top into the water-pass tray (35) having a rectangular tray-shaped design. The water then flows from the water-pass tray (35) into the interim chamber (37). The first effluent outlet (39) at the bottom of the interim chamber (37) is connected via a pipeline to the main pipe of the water distribution module (8) located in the multilayer media filtration chamber (13). The clarified liquid that has undergone preliminary chemical treatment flows by gravity from the first effluent outlet (39) of the interim chamber (37) into the water distribution module (8).

The spray pipes of the water distribution module (8) are provided with micro-apertures. The clarified liquid is uniformly sprayed through these micro-apertures onto the surface of the multilayer media filtration module (11). Under the action of gravity, the clarified liquid slowly flows downward through the multilayer media filtration module (11). Filtration occurs progressively from larger filter media particle sizes at the upper layer to smaller particle sizes at the lower layer of the multilayer media filtration chamber (13). Common filtration media include, but are not limited to, anthracite, activated carbon, coconut shell materials, and sand or gravel of different particle sizes. The multilayer media filtration module (11) may adopt different combinations and arrangements of filtration media, different media layer depths, and different pore sizes, which may be selected and configured according to local purified-water output requirements. For example, in rural areas where fertilizers are widely used and surface water contains relatively high levels of nitrogen and ammonia, zeolite may be used as a filtration medium. When surface water contains relatively high levels of heavy metals or has unpleasant odors, activated carbon may be used for adsorption treatment. Sand and gravel are also common filtration materials and are often used when the total suspended solids concentration is less than 500 mg/L. The selection and combination of filtration media are not limited and may be determined according to local water quality conditions and water supply requirements.

Residual suspended solids and viscous colloidal particles in the clarified liquid are intercepted by the multilayer media filtration module (11), thereby further removing impurities. The clarified liquid passes through the multilayer media filtration module (11) and reaches the bottom of the multilayer media filtration chamber (13). The bottom of the chamber is uniformly provided with perforated wedge wire lateral screen pipework (12). The filtrate flows through the openings into the wedge wire lateral screen pipework (12), and the collected filtrate is discharged through the filtrate outlet (38).

When the purification system is operating normally, the three-way valve (9) connects the passage between the filtrate outlet (38) and the second effluent outlet pipe (24). The second transfer pump (32) starts operating and pumps the filtrate from the wedge wire lateral screen pipework (12) to the UV disinfection system (25) for sterilization and disinfection, thereby directly eliminating bacteria, viruses, and other pathogens in the purified water. The treated water is then pumped by the second transfer pump (32) from the outlet of the UV disinfection system (25) into the enclosed clean water storage tank (20) for storage. A water level sensor is arranged in the enclosed clean water storage tank (20). When the sensor detects a high water level, both the second transfer pump (32) and the first transfer pump (33) are stopped to suspend the pumping of filtrate from the multilayer media filtration chamber (13), thereby preventing overflow from the hopper-type casing water treatment tank (4) and the multilayer media filtration chamber (13) and avoiding water waste. A corresponding water level sensor is also arranged in the influent balance chamber (15), and its working principle is the same as described above. Considering the storage time of purified water and the distance between the storage tank and the water collection point, as well as variations in the internal conditions of distribution pipelines, a certain amount of chloride disinfectant may be added to the enclosed clean water storage tank (20) to prevent secondary contamination. The type and dosage of disinfectant may be designed according to the local surface water quality and purified water standards. The disinfectant may be stored in a dosing float provided with a rotatable dosing opening, allowing adjustment of the dosing rate. The dosing level should be determined according to the local surface water quality, the storage time of purified water in the storage tank, and the specific internal conditions and pipeline length between the storage tank and the water collection point, and should be adjusted according to local conditions. Users may connect a pipeline to the clean water outlet (23) of the enclosed clean water storage tank (20) to deliver purified water to the point of use.

Sludge accumulated at the bottom of the hopper-type casing water treatment tank (4) should be periodically removed to prevent blockage. The sludge may be discharged through the desludge outlet (26). The desludge valve (30) connects the desludge outlet (26) with the desludge pipe (29), and the other end of the desludge pipe (29) is connected to a sludge dewatering bag (17). When the desludge valve (30) is opened, the sludge is discharged by gravity through the desludge pipe (29) into the sludge dewatering bag (17) for dewatering treatment. Residual liquid passing through the sludge dewatering bag (17) flows back into the influent balance chamber (15) for further treatment, while the dewatered sludge solids may be collected for centralized disposal. This arrangement reduces transportation costs and the carbon emissions associated with sludge disposal. Re-treatment of the residual liquid contained in the sludge can reduce water resource waste and maximize the recovery of usable purified water.

To ensure the filtration efficiency and service life of the multilayer media filtration module (11), the multilayer media filtration chamber (13) is provided with a backwashing subsystem. The filtration device requires periodic backwashing to remove impurities and contaminants retained between the layers of the multilayer media filtration module (11) so as to maintain filtration efficiency. When backwashing of the multilayer media filtration chamber (13) is required, the three-way valve (9) closes the passage originally connecting the filtrate outlet (38) and the second effluent outlet pipe (24), and instead connects the passage between the filtrate outlet (38) and the backwashing water outlet pipe (5). The purified water stored in the enclosed clean water storage tank (20) is used for backwashing. After the filtrate outlet (38) is connected to the backwashing water outlet pipe (5), due to the height difference between the equipment, the backwashing water in the enclosed clean water storage tank (20) generates a certain impact force by means of gravity and the height difference, such that the entire backwashing process can be completed without external force or additional electrical equipment. The backwashing water flows out from the backwashing water outlet (1), is conveyed through the backwashing pipeline and the three-way valve (9) to the filtrate outlet (38), and is finally delivered to the main channel and branch channels of the wedge wire lateral screen pipework (12) uniformly arranged at the bottom of the multilayer media filtration chamber (13). The backwashing water flows out through the apertures around the wedge wire lateral screen pipework (12) and enters the multilayer media filtration module (11) from the bottom, thereby performing backwashing of the filtration module from bottom to top. During backwashing, the backwashing water flows upward from the bottom of the multilayer media filtration module (11). As water is continuously supplied, contaminants intercepted by the filtration media are flushed to the top layer of the multilayer media filtration module (11). The backwashing wastewater overflows through the triangular weir on the triangular weir plate (14) and flows into the influent balance chamber (15) for wastewater re-treatment.

Compared with the prior art, the present system maximizes the use of gravity of the water itself for transportation and backwashing within the pipelines, thereby reducing additional power consumption. In addition, during the chemical dosing process, by changing the flow state of the water and providing static mixing blades within the pipelines, thorough mixing of raw water and chemicals is ensured, thereby minimizing the power consumption of the water purification system. Meanwhile, a brushless motor centrifugal pump is provided as the first transfer pump (33) for connecting the influent balance chamber (15) and the impinging stream reactor. In addition, a second brushless motor centrifugal pump serves as the second transfer pump (32) to facilitate the flow of purified water within the pipelines connecting the multilayer media filtration chamber (13), the UV disinfection system (25) and the enclosed clean water storage tank (20). Compared with conventional electric centrifugal pumps available on the market, brushless motor centrifugal pumps are more energy-efficient, thereby reducing the electrical burden in remote areas. Considering that the centrifugal pumps, the equipment control area (41) and the UV disinfection system (25) require a small amount of electrical power to maintain normal operation, the surface water purification system may, according to local power supply conditions, location and weather, be equipped with a solar photovoltaic panel installed on the top of the enclosed clean water storage tank (20) of the standardized, low-carbon modular water treatment system, so that the system can operate independently even when disconnected from the power grid.

Compared with the prior art, the present invention performs multi-stage treatment of surface water, significantly reducing impurity particles, heavy metals and ammonia nitrogen content in the surface water. The design divides the water treatment system into a three-layer compact modular structure, which greatly reduces the footprint of the purification equipment and facilitates transportation. Moreover, the purification process is largely automated, and most system operations can be controlled through the equipment control module (19), making the system easy to use and install while reducing labor required for system management. In addition, chemicals and filtration media can be selected according to local conditions and available resources, thereby reducing the need for importing materials and consumables from other regions and lowering carbon emissions associated with transportation.

The above embodiments are only used to illustrate the technical solutions of the present invention and are not intended to limit the same. Although the present invention has been described in detail with reference to the foregoing embodiments, those skilled in the art should understand that modifications may still be made to the technical solutions described in the foregoing embodiments, or equivalent substitutions may be made to some of the technical features. Such modifications or substitutions do not depart from the spirit and scope of the technical solutions of the embodiments of the present invention, and shall all fall within the protection scope of the present invention.

## Claims

1. An apparatus for water treatment, wherein the apparatus is arranged in a three-layer stacked configuration, and the apparatus comprises:
(a) a multipurpose tank (22) forming a bottom layer of the apparatus, the multipurpose tank comprising an influent balance chamber (15); a multilayer media filtration chamber (13); a triangular weir plate (14) that separates the influent balance chamber (15) from the multilayer media filtration chamber (13); a raw water inlet (27) formed at an upper portion of a side wall of the multipurpose tank for intake of raw water;
a multilayer media filtration module (11) disposed in the multilayer media filtration chamber (13); a wedge wire lateral screen pipework (12) positioned below the multilayer media filtration module (11); a **water distribution module (8)** for distributing water across the filtration area; and a **filtrate** outlet (38) formed on a side wall, wherein the wedge wire lateral screen pipework is in fluid communication with the **filtrate** outlet;
(b) an impinging stream reactor (21) disposed above the multipurpose tank, the impinging stream reactor comprising: (i) a **hopper-type casing water treatment tank (4)** having a hollow cylindrical upper portion and a hollow inverted conical lower portion, the upper portion being provided with a **hopper-type casing water treatment tank** inlet (43) for receiving raw water from the influent balance chamber via a first fluid pathway comprising a first influent pipe and a second fluid pathway comprising a second influent pipe; (ii) an automatic chemical dosing subsystem connected to the **hopper-type casing water treatment tank** inlet; (iii) a plurality of **conical filters (3)** stacked vertically in a central region of the **hopper-type casing water treatment tank**; (iv) a transfer module disposed at an upper portion of the hopper-type casing water treatment tank (4) for receiving clarified water separated by the conical filters (3), the transfer module comprising a water-pass tray (35) and a transit tray (37), wherein the transit tray (37) is provided with a first water outlet (39), and the first water outlet (39) is in fluid communication with the water distribution module (8); (v) an equipment control module (19) for controlling operation of the apparatus; and (vi) a UV disinfection system (25);
(c) an enclosed clean water storage tank disposed above the impinging stream reactor, the enclosed clean water storage tank comprising a clean water inlet (40), a clean water outlet for extracting purified water, and a backwashing subsystem for the multilayer media filtration module, wherein the clean water inlet (40) is in fluid communication with the UV disinfection system.

2. The apparatus of claim 1, wherein the automatic chemical dosing subsystem comprises a chemical dosing system including a plurality of chemical tanks (18) and a dosing device for pumping chemicals from the chemical tanks, and wherein the influent balance chamber (15) is provided with a first influent pipe (6) that is in fluid communication with a first transfer pump (33), the outlet of the first transfer pump being connected to a second influent pipe (42) leading to the hopper-type casing water treatment tank inlet (43), and further wherein a first chemical injection point (34) is formed on an elbow of the first influent pipe, a second chemical injection point (10) is formed on an elbow of the second influent pipe, and a third chemical injection point is provided at the outlet of the first transfer pump, each of the first, second, and third chemical injection points being in fluid communication with the dosing device outlet.

3. The apparatus of claim 1, wherein an **impact-type nozzle (2)** is built into the hopper-type casing water treatment tank (4) and disposed closely against the hopper-type casing water treatment tank inlet (43), and wherein the water-pass tray (35) has a generally rectangular shape with rounded corners and a centrally disposed circular opening, a hollow cylinder being provided at the bottom of the opening, wherein the upper ends of the stacked conical filters (3) are in fluid communication with the hollow cylinder.

4. The apparatus of claim 3, wherein the water distribution module (8) comprises a main pipe member shaped in the form of a rectangle with rounded corners and having a plurality of micro-holes arranged to face downward toward the multilayer media filtration chamber.

5. The apparatus of claim 1, further comprising a sludge dewatering bag (17), wherein: the hopper-type casing water treatment tank (4) is provided at the lower portion thereof with a desludge outlet; gratings (16) are disposed above the influent balance chamber (15); the sludge dewatering bag (17) is placed on the gratings (16); and the desludge outlet is connected to a desludge valve (30), the desludge valve (30) being configured to connect the desludge outlet with the sludge dewatering bag (17) via a pipeline.

6. The apparatus of claim 2, wherein each of the plurality of chemical tanks (18) is individually provided with an independent dosing device.

7. The apparatus of claim 2, further comprising an equipment control area (41) positioned adjacent to one side of the hopper-type casing water treatment tank (4), wherein the chemical tanks (18) are disposed in a central portion of the equipment control area, the equipment control module (19) is located above the chemical tanks (18), the second transfer pump (32) and the UV disinfection system (25) are disposed in a lower lateral portion of the equipment control area, and the first transfer pump (33) is disposed in a lower lateral portion of the equipment control area at a location spaced apart from the second transfer pump (32).

8. The apparatus of claim 2, wherein static mixing blades are provided within a vertical portion of the second influent pipe (42).

9. The apparatus of claim 3, further comprising a pH probe and a liquid level sensor, each disposed at the center position of the water-pass tray (35).

10. The apparatus of claim 7, wherein the enclosed clean water storage tank (20) is provided with a backwashing water outlet (1), and wherein a backwash subsystem comprises an electric three-way valve (9) and a backwash liquid discharge pipe (5),
(a) the first port of the electric three-way valve being in fluid communication with the filtrate outlet (38);
(b) the second port of the electric three-way valve being in fluid communication with the backwash liquid discharge pipe (5); and
(c) the third port of the electric three-way valve being in fluid communication with a second effluent outlet pipe (24), wherein the second effluent outlet pipe (24) is connected to the second transfer pump (32), the second transfer pump (32) is connected to the inlet of the UV disinfection system (25), and the outlet of the UV disinfection system (25) is in fluid communication with the clean water inlet (40) of the enclosed clean water storage tank (20).

11. The apparatus of claim 10, wherein the clean water inlet (40) is formed on an upper portion of a front side of the enclosed clean water storage tank (20), the clean water outlet (23) is formed at a mid-lower portion of a side surface of the enclosed clean water storage tank (20), and the backwashing water outlet(1) is formed opposite the clean water outlet (23).

12. The apparatus of claim 1, further comprising:
(a) a liquid level sensor provided in the influent balance chamber (15) of the multipurpose tank; and
(b) a liquid level sensor provided in the enclosed clean water storage tank (20).
